# EUROPEAN PATENT APPLICATION

(11) **EP 2 262 302 A1**
(43) Date of publication of application: **15.12.2010**
(21) Application number: 09290427.5
(22) Date of filing: 10.06.2009
(51) Int. Cl.: H04W 28/02, H04W 36/18, H04W 92/12

(54) **Telecommunication method, system and apparatus**

(71) Applicant: Alcatel Lucent, 75008 Paris (FR)
(72) Inventor: Mueckenheim, Jens, 90411 Nuremberg (DE); Jugl, Enrico, 90409 Nuremberg (DE)
(74) Representative: Richardt, Markus Albert

(57) **Abstract**

A base station apparatus (100, 200, 210) adapted for connecting a wireless appliance (220, 222) with a network controller (226), the base station apparatus comprising:
- a network controller connector (102) being adapted for receiving a data status report that comprises a measure of the transmission rate of data packets between the base station apparatus and the network controller,
- a radio system connector (104) being adapted for receiving a data packet from the wireless appliance through a wireless communication channel (204, 214),
- a control system (106) being adapted for transferring the data packet between the network controller connector and the radio system connector, wherein the control system is further adapted for receiving the data status report, wherein the control system is further adapted for disabling the reception of the data packet when the measure exceeds a predetermined threshold.

## Description

### Field of the Invention

The invention relates to a method, system, and apparatus for improving the efficiency of data transmission on a wireless communication network.

### Background of the Invention

HSUPA (High-Speed Uplink Packet Access) or E-DCH (Enhanced DCH) is a Release 6 feature in the 3GPP UMTS standard with the aim to provide improved data transmission in the uplink for packet switched services like interactive/ background or streaming Quality of Service (QoS) traffic.

In order to improve the reception of the uplink data, E-DCH supports soft handover with more than one UMTS base station (NodeB). The current scheme that is used is that the user equipment (UE) transmits a data packet to several different cells. When the UE receives an acknowledgement (ACK) message from any one of the NodeBs, it transmits the next data packet. If no ACK message is received, this can include receiving no ACK (i.e. no acknowledgement message e.g. due to discontinued transmission - DTX) and also receiving explicit NACK (negative acknowledgement message) from the cells, the data packet is retransmitted. The NodeB base stations are connected to a radio network controller (RNC), which provides access to the cellular communications network to the NodeBs. An lub is the network connection between the NodeB and the RNC. If there is too much traffic between a NodeB and the RNC, the NodeB will send a message (absolute or relative scheduling grant) to the UE instructing it to reduce the rate at which it is uploading data.

Therefore, if a single lub carries too much traffic, the data transmission rate of the UE to all cells participating in a soft handover will be reduced using scheduling grants. This is true even if only a single NodeB and its associated lub is busy. In other words, one NodeB with a busy lub will reduce the data uplink rate for all NodeBs what are participating in the E-DCH soft handover.

### Summary of the Invention

The invention provides for a base station apparatus, a wireless communication system, and a method for managing congestion in a wireless network in the independent claims. Embodiments of the invention are described in the dependent claims. Embodiments of the invention address the aforementioned problem by having a base station apparatus with a congested network connection between base station apparatus and the network controller. According to one embodiment, the base station apparatus can disable decoding of the data packet and not send a message instructing the wireless appliance to reduce the rate at which it is uploading data. This can be done in a variety of ways: The base station apparatus can send an explicit negative acknowledgment (NACK) message rejecting the packet or the base station apparatus can simply ignore the data packet when the network connection is congested, thus not sending an acknowledgement message. The wireless appliance has the benefit of having soft handover with a variety of base station apparatuses, and when a particular base station apparatus is too busy it is dynamically removed from receiving data from the wireless appliance without affecting the rate at which data is transmitted to the other base station apparatuses.

Such allows to combine the advantages of soft handover HARQ gain, when there is no transport network limitation, with the "virtual" reduction of the active set, when transport network overload is present. This could be done by dynamically adding or removing the non-serving radio links to or from the active set, respectively (at the network controller or internally in the NodeB).

Embodiments of the invention may have the benefits that they solve the transport network overload problem by dynamically stopping or starting decoding of E-DCH data on the non-serving radio links when transport network becomes congested or uncongested, respectively.

Embodiments of the invention may have the following advantages:
- Embodiments have the potential to improve the user/ cell throughput compared to methods using only scheduling grants that limit the uplink traffic.
- Embodiments can be easily combined with E-DCH scheduling for serving users.

A wireless appliance is defined herein as any communication device which established at least a two way wireless communication with a device adapted for receiving the wireless communication connection. A wireless communication channel is defined herein as the wireless communication connection between the wireless appliance and the device adapted for receiving the wireless communication connection. Examples of a wireless appliance includes a cell phone, a handheld radio, and any computing device able to connect to a wireless network. The general term used for wireless appliance in wireless networks is "mobile terminal."

A base station apparatus is defined herein as a device adapted for establishing a wireless communication connection with a wireless appliance and for providing the wireless appliance access to a communication network. For example the communication network can be the global wireless or wireline communication network, public land mobile or fixed network, or the world wide web. A network controller is defined herein as a controller that manages a group of base station apparatuses and provides the base station apparatuses access to the communication network. An RNC is an acronym that stands for a Radio Network controller. An RNC is a network controller that controls a group of cellular telephone base stations. lub is defined herein as the interface between a NodeB and a RNC.

NB is an acronym for "Universal Terrestrial Radio Access Network NodeB" and is an embodiment of a base station apparatus. The term NodeB is used to refer to an embodiment of a NodeB base station. UE is an acronym for User Equipment and is equivalent to a wireless appliance. DCH is an acronym that stands for dedicated channel. E-DCH is an acronym that stands for enhanced dedicated channel. ACK is an acronym for an acknowledgement message. NACK is an acronym for a negative acknowledgement message. TN is an acronym for transport network. ATM is an acronym for asynchronous transfer mode. Soft handover is where a cellular telephone or UE is attached to more than one cell during a call or during data transmission. AS is an abbreviation for active set. AS is the number of cells for which soft handover is active. Sch is an abbreviation for an E-DCH scheduler. ARQ is an acronym for automated repeat request. HARQ is an acronym for Hybrid Automatic Repeat ReQuest. HARQ is a technique in which corrupted data packets are stored so that a good data packet can be constructed from a combination of corrupted ones. E-HICH is an abbreviation for E-DCH HARQ Acknowledgement Indicator Channel, and is a dedicated downlink physical channel carrying the hybrid ARQ acknowledgement indicator for the received E-DCH channel in uplink. RRC is an acronym for Radio Resource Control. RRC messages are used amongst others for the establishment, connection, and release of wireless communication connections.

According to a first aspect, there is provided a base station apparatus adapted for connecting a wireless appliance with a network controller. The base station apparatus comprises a network controller connector that is adapted for receiving a data status report that comprises a measure of the transmission rate of data packets between the base station apparatus and the network controller. The base station apparatus further comprises a radio system connector being adapted for receiving a data packet from the wireless appliance through a wireless communication channel. The base station apparatus further comprises a control system that is adapted for transferring the data packet between the network controller connector and the radio system connector. The control system is further adapted for receiving the data status report. The control system is further adapted for disabling the reception of the data packet when the measure exceeds a predetermined threshold. This base station apparatus is advantageous, because instead of sending a message via the radio system connector to the wireless appliance via the wireless communication channel to reduce its rate of data transmission when the measure exceeds a predetermined threshold it instead simply ignores the data packet. This is particularly advantageous when there is a variety of such base station apparatuses installed in a communication system or network. If a single base station apparatus were to send a message to the wireless appliance to reduce its rate of transmission the communication of the wireless appliance with all of the other base stations would be slowed down also. By simply disabling the reception of the data packet, the base station apparatus essentially ignores or rejects the data packet.

In an embodiment, the base station apparatus comprises an interface means for connecting with a network controller. The base station apparatus further comprises an interface controller adapted for detecting the presence of a congestion connection on the interface. The base station apparatus further comprises a reception means adapted for receiving channel coded information over radio channels. The base station apparatus further comprises a controller adapted for disabling the reception of the channel coded information in response to the reception of a congestion condition indication from the interface controller. The interface controller may comprise the network controller connector. The reception means may comprise the radio system connector.

In another embodiment, the control system is adapted for decoding the data packet. The reception of the data packet is disabled by disabling the decoding of the data packet. This is advantageous, because if the data packet is not decoded, then the base station apparatus will not recognize that it has received a data packet. This is a very simply modification of the base station apparatus which can be used to achieve the goal of the embodiments of the invention.

In another embodiment, the control system is adapted for sending a negative acknowledgement message to the wireless appliance when the measure exceeds the predetermined threshold and the data packet is received. This is advantageous, because the base station apparatus sends a negative acknowledgement message instead of sending a message to the wireless appliance to reduce its rate at which it is transmitting data. Sending the negative acknowledgement message is advantageous, because it does not slow down communication of the wireless appliance with other base station apparatuses.

According to another aspect, there is provided a wireless communication system for connection a wireless appliance with a communication network. The wireless communication system comprises at least two base station apparatuses according to an embodiment of the invention. The wireless communication system further comprises at least two radio systems. There is a radio system connected to each of the at least two base station apparatuses. The wireless communication system further comprises a network controller. The network controller is adapted to be connected to a communication network. The network controller is adapted for receiving a data packet from the base station apparatuses. This embodiment of a wireless communication system is advantageous, because these base station apparatuses, when the base station apparatus is too busy and sending too much data to the network controller, it will not send a message through the radio system to the wireless appliance telling it to reduce its rate of data transmission. The effect is that the wireless appliance will have a faster data communication.

In an embodiment, the wireless communication system is adapted for performing a simultaneous communication channel with the wireless appliance. The simultaneous communication channel comprises at least two radio communication channels formed using the at least two radio systems. All radio systems that form the simultaneous communication channel transmit an identical data packet to the wireless appliance. All radio systems that form the simultaneous communication channel are adapted to receive the data packet from the wireless appliance. In other words, the data packet is sent from the wireless appliance to the radio systems, and the identical data packet is sent from the radio systems using the simultaneous communication channel to the wireless appliance. The transmission of the data packet by the wireless appliance may be a single transmission that is received by all of the radio systems, or the transmission of the data packet may transmitted by the wireless appliance to each of the radio systems individually.

In another embodiment, all the radio systems that form the simultaneous communication channel are adapted such that the transmission of the identical data packet results in macro diversity gain. This is advantageous, because the signal that the simultaneous communication channel forms is stronger than a single communication channel.

In yet another embodiment, at least one of the wireless communication channels is adapted for instructing the wireless appliance to transmit the data packet at a predetermined rate. The predetermined rate is maintained if the measure for any of the base stations exceeds the predetermined threshold. This is advantageous because if one base station apparatus is too busy and is transmitting too much data to the network controller it will not inform the wireless appliance to transmit at a lower rate. This prevents the communication rate from being reduced by a busy lub.

According to another aspect, a wireless network comprises a base station apparatus. The base station apparatus is connected to a network controller using an interface. The base station apparatus is adapted for receiving channel coded information from a wireless communication channel. The method comprises the step of detecting a presence of a congestion condition on the interface. The method further comprises the step of disabling reception of the channel coded information when a congestion condition is detected. The advantage of this have been previously discussed.

According to yet another aspect, there is provided a method for managing congestion in a wireless network comprising a base station apparatus connected over an interface with a controller, wherein the base station apparatus is adapted for receiving channel coded information over radio channels. The method comprises the step of testing the presence or absence of a congestion condition on the interface, and the step of disabling reception of the channel coded information when a congestion condition is detected.

According to an embodiment, the base station apparatus is adapted for decoding the channel coded information. The reception of the data packet channel coded information is disabled by disabling the decoding of the channel coded information.

In an embodiment, the method further comprises the step of replying with a negative acknowledgement message when a congestion condition is detected. The advantage of this has also already been discussed.

In another embodiment, the channel coded information comprises a data packet. The method further comprises the step of receiving a data packet through the wireless communication channel. The detection of the congestion condition on the interface is performed by determining if a measure of the transmission rate of data packets between each base station apparatus and a network controller is above a predetermined threshold.

In yet another embodiment, the wireless network comprises two or more base station apparatuses. Each base station apparatus is connected to a network controller using an interface. Each base station apparatus is adapted for receiving channel coded information from a wireless communication channel. The method further comprises the step of transmitting an identical data packet on all the two more wireless communication channels such as there is a macro diversity gain.
In yet another embodiment, the data packet is received from a wireless appliance.

In yet another embodiment, the method further comprises the step of instructing the wireless appliance to transmit the data packets at a predetermined rate. The method further comprises the step of maintaining the predetermined rate if the measure for any of the base stations exceeds the predetermined threshold for a subsequent data packet.

Another broad aspect provides a computer program product comprising machine executable code for performing the above-mentioned methods when loaded and run on computer means of the wireless communication system.

Another broad aspect provides a machine readable medium that contains computer program code, wherein, when the computer program code is executed by a processor, the processor performs the above-mentioned methods.

### Brief Description of the Drawings

In the following preferred embodiments of the invention will be described, by way of examples only, and with reference to the drawings in which:
Figure 1 shows an embodiment of a base station apparatus,
Figure 2 shows an embodiment of a wireless communication system,
Figure 3 shows an embodiment of a method according to the invention,
Figure 4 shows a further embodiment of a method according to the invention,
Figure 5 illustrates E-DCH performance when there is no limitation on the transport network,
Figure 6 illustrates E-DCH performance when the is a limitation on the transport network.

### Detailed Description

Like numbered elements in these figures are either identical elements or perform the same function. Elements which have been discussed previously will not necessarily be discussed in later figures if the function is identical.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The present invention will be described below in its particular application to third generation (3G) cellular networks of the UMTS ("Universal Mobile Telecommunications Service") type. However, it will be appreciated that it is applicable to very diverse types of digital cellular systems, such as for instance CDMA2000 or TD-SCDMA or evolutions thereof, or 3G LTE ("Long Term Evolution") systems. The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

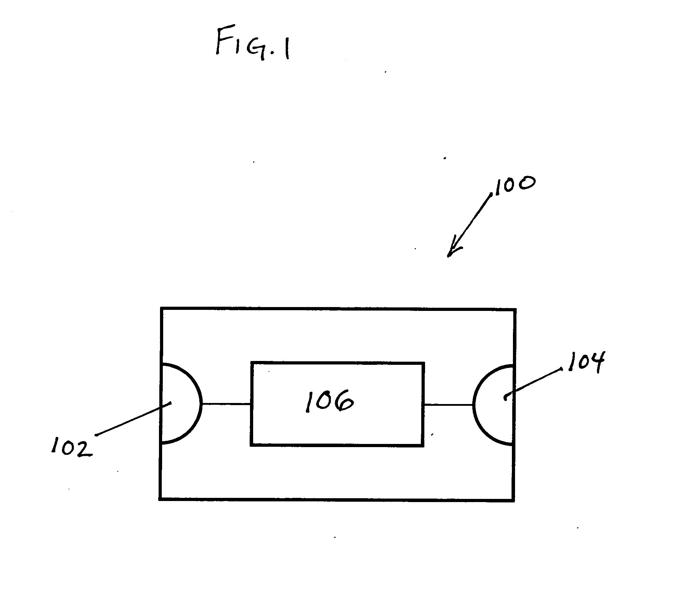

Figure 1 shows an embodiment of a base station apparatus 100. There is a network controller connector 102 which is adapted for connecting to a network controller and transmitting and receiving data between the network controller and the base station apparatus 100. The network control or connector 102 is adapted for receiving a data status report that comprises a measure which indicates the transmission rate of data packets between the base station apparatus 100 and the network controller. This allows the base station apparatus 100 to know how much traffic there is between the base station apparatus 100 and the network controller. The network controller connector can be a network interface. The data status report can be generated by the network controller, the network connecting the network controller and the base station apparatus 100, within the network controller connector 102, and it can also be generated by the control system 106 if the network controller connector 102 is integrated into the control system 106. The network controller connector 102 is connected to the control system. The control system 106 is a device which is capable of performing machine executable instructions. The control system 106 can be a microcontroller, a computer, a microprocessor or other device which is adapted for performing machine executable instructions. The control system 106 forwards data packets from the network controller connector 102 to the radio system connector 104. The control system 106 also forwards data packets from the radio system connector 104 to the network controller connector 102. In some embodiments, the data packets received via the network controller connector are encoded, and the control system 106 is adapted for decoding them. The radio system connector 104 is adapted for receiving data packets from a radio system. In some embodiments, the control system 106 is adapted for decoding data packets received via the radio system connector 104. In some embodiments the control system is adapted for encoding data packets transmitted via the radio system connector 104.

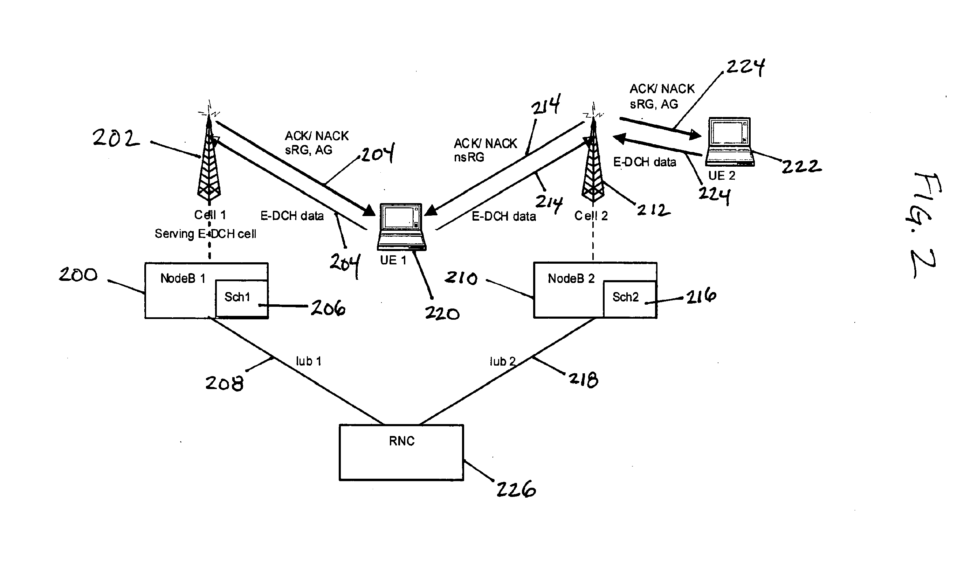

Figure 2 shows an embodiment of a wireless communication system. There is a first base station apparatus 200, which in this embodiment is a NodeB. The first base station apparatus 200 comprises a scheduler 206. The first base station apparatus 200 is connected to a first radio system 202 and the first base station apparatus 200 is connected via an lub1 208 to a network controller 226. The network controller 226 in this embodiment is a radio network controller (RNC). Also shown is a second base station apparatus 210. Also in this embodiment the second base station apparatus 210 is a NodeB. The base station apparatus 210 comprises a scheduler 216. The second base station apparatus 210 is connected via an lub2 218 to the network controller 226. The second base station apparatus 210 is connected to a radio system 212. In this embodiment the radio systems 202 and 212 are E-DCH cells. There is a first wireless appliance UE1 220 that has a wireless communication channel 204 that connects it with the first base station apparatus 202. The wireless appliance 220 is connected via a second wireless communication channel 214 with radio system 212. Also shown is a second wireless appliance UE2 222 that is connected via a third wireless communication channel 224 with the second radio system 212.

Figure 2 shows an example of E-DCH transmission with and without soft handover. UE1 220 is connected to Cell1 202 and Cell2 212 of NodeB1 200 and NodeB2 210, respectively. Both NodeBs 200, 210 are connected to the RNC 226 on the lub links lub1 208 and lub2 218, respectively. UE1 220 acts as a serving UE for Cell1 202 and as a non-serving UE for Cell2 212. UE2 222 is only connected to Cell2 212 and acts as a serving UE for this cell. For clarity only the E-DCH related data flow is shown. Other flows like for associated DPCH or HSDPA connection are not shown although they are also essential part of each UMTS data connection.

With this example configuration, the same E-DCH user data is received by NodeB1 200 and NodeB2 210. Both NodeBs 200, 210 will try to decode the received E-DCH data and the associated HARQ entity will generate ACK or NACK sent on E-HICH to the UE1 220, depending if the data has been received correctly or not. On the reception of the ACK/ NACK the UE1 220 performs re-transmissions, accordingly. If the UE1 220 receives a NACK from both NodeBs it retransmits the data, otherwise a new transmission is started.

For Cell1 202 and Cell2 212 E-DCH scheduler Sch1 206 and Sch2 216 are associated in NodeB1 200 and NodeB2 210, respectively, which control the uplink data transmission. With the scheduled E-DCH method the NodeB sends regularly scheduling grants to the UE1 220, which then updates its internal serving grant accordingly. The serving grant determines the maximum data rate, which the UE1 220 can use afterwards. There are three types of scheduling grants defined:
a) Absolute grants (AG), which provide an absolute limit of the scheduling grants. AG is only sent on E-AGCH from the E-DCH serving cell. In the example of figure 2 AG for UE1 220 are only received from Cell1 202 and assigned by scheduler Sch1 206. In the same way, AG for UE2 222 are only received from Cell2 212 and assigned by scheduler Sch2 216.
b) Dedicated serving relative grants (sRG), which provide an increment or decrement of the scheduling grant. Usually, sRG are only sent on E-RGCH from the cell(s) of the NodeB that contains the E-DCH serving cell. In the example of figure 2 sRG for UE1 220 are only received from Cell1 and assigned by scheduler Sch1, too. In the same way, sRG for UE2 222 are only received from Cell2 212 and assigned by scheduler Sch2 216.
c) Common or non-serving relative grants (nsRG), which the scheduler can use to reduce the scheduling grant of one or a group of UEs in order to e.g. overcome overload situations. Usually, nsRG are sent on E-RGCH from the cells of the NodeB that does not contain the E-DCH serving cell. In the example of figure 2 the nsRG for UE1 220 are received from Cell2 and assigned by scheduler Sch2 216. Because it is only connected to its serving Cell2, there is no nsRG assigned for UE2 222.

From the principles described above there is the following trade-off between macro-diversity gain in HARQ and the scheduling from both NodeBs when the UE is in soft handover (cf. the example shown in figure 2):
On the one side, because NodeB1 200 and NodeB2 210 receive the uplink data from UE1 220 on different radio paths, the receiver performance improves. In consequence the user and cell throughput shall improve with soft handover. On the other side, because UE1 220 may receive non-serving relative scheduling grants from NodeB2 210 there is now a higher probability to get a downgrade command from this NodeB2 210 in order to reduce the data rate, hence user and cell throughput might be reduced.

### Embodiment with internal detection of overload

This embodiment uses a detection mechanism, which may be applied inside the NodeB. It is especially suitable, when the NodeB is connected over a single lub link to the RNC (e.g. over ATM). In this case, the NodeB can proactively detect if the connected link gets into overload or is close to going into overload. The proposed algorithm for this embodiment with an example according to figure 2 is as follows:
1. When the NodeB2 210 detects overload on the connected lub2 218 it internally sends an overload indicator to the E-DCH scheduler Sch2 216. Detection can be done for example by regularly observing the outgoing traffic queue and indicating overload when the queue size increases over a predetermined threshold.
2. On the reception of the lub overload indicator, the E-DCH scheduler Sch2 216 selects the non-serving E-DCH UE1 220 and stops decoding uplink data from UE1 220. The selection criterion can be based e.g. on amount of uplink traffic generated by a specific UE, the priority of the service or the radio condition as reported from the UE.
3. Because the user data is no more decoded, the NodeB2 210 will send back always NACKs to the UE1 220. In fact, nothing is sent on the E-HICH, which according to the 3GPP UMTS standard is interpreted as a NACK. Because the user data from UE1 220 can be still decoded at the serving NodeB1 200, it receives ACK/ NACK data on E-HICH from NodeB1 200. That means, the data transmission is not interrupted, but macro-diversity gain from NodeB2 210 is temporarily lost. In consequence, the E-DCH performance for this UE1 220 is slightly degraded.
4. Once the overload has overcome on lub2 218, the E-DCH scheduler Sch2 216 may receive another internal lub load message and again now selects the non-serving UE1 220 to start decoding uplink data from UE. The users are selected according to the same rules as under step 2.
5. Because the user data from UE1 220 is now decoded again, NodeB2 210 starts sending ACK/ NACK on E-HICH as before the overload. The macro-diversity gain is now again exploited and hence, user performance is improved.

### Embodiment which uses the reception of a transport network (TN) congestion overload indicator.

This method uses the TN congestion indicator that has been defined in 3GPP UMTS standard TS25.902. It is especially suitable, when the NodeB is not directly connected to the RNC 226 (e.g. over IP), in case the user is served over a drift RNC 226 or when the lub link is shared between different operators. In this case, the RNC 226 may reactively detect when the transport network went into overload. The proposed algorithm for this embodiment with the example according to figure 2 is as follows:
1. When the RNC 226 detects overload on lub2 218 it may send the TN congestion indicator to NodeB2 210. There can be two means of congestion indicated, loss of packets in the transport network or delay built up due to increased packet delay.
2. On the reception of the TN congestion indicator, the E-DCH scheduler Sch2 216 in NodeB2 210 stops decoding any uplink data from UE1 220.
3. Because the user data from UE1 220 is no more decoded, NodeB2 will send back always NACKs to the UE1 220. In fact, nothing is sent on the E-HICH, which according to the 3GPP UMTS standard is interpreted as a NACK. Because user data from UE1 220 is still decoded at the serving NodeB, it receives ACK/ NACK data on E-HICH from NodeB1 200. That means, the data transmission is not interrupted, but macro-diversity gain from NodeB2 210 is temporarily lost. In consequence, the E-DCH performance for this UE1 220 is slightly degraded.
4. Once the overload has overcome on lub2 218, the E-DCH scheduler Sch2 216 may receive another TN congestion indicator from RNC 226 that indicates no overload and starts decoding uplink user data from UE1 220.
5. Because the user data from UE1 220 is now decoded again, NodeB2 210 starts sending ACK/ NACK as before the overload. The macro-diversity gain is now again exploited and hence, user performance is improved.

### Embodiment wherein radio links are dynamically added and/or dropped.

This method suggests an algorithm that dynamically adds and/or drops radio links from the E-DCH active set in case of congestion detected and/or overcome on the transport network. It may be implemented in an RNC, which makes it particularly suitable when no or barely no change in the NodeB is desired or possible. The proposed algorithm for this embodiment with the example according to figure 2 is as follows:
1. When the RNC 226 detects overload on lub2 218 it may decide to temporarily drop the E-DCH non-serving Cell2 212 for UE1 220 from the E-DCH active set.
2. The RNC 226 sends NBAP Radio Link Reconfiguration message to the NodeB2 210, which then takes out Cell2 212 from the E-DCH reception. There is no E-HICH assigned anymore and, hence, no ACK/ NACK is sent to UE1 220.
3. The RNC 226 will also send a RRC message to UE1 220. On the reception, UE1 220 does no more listen on E-HICH from Cell2 212. Because user data from UE1 220 is still decoded at the serving NodeB1 200, it receives ACK/NACK data on E-HICH from NodeB1 200. That means, the data transmission is not interrupted, but macro-diversity gain from NodeB2 210 is temporarily lost. In consequence, the E-DCH performance for this UE1 220 is slightly degraded.
4. Once the overload has overcome on lub2 218, the RNC may decide to add Cell2 212 to the E-DCH active set. The RNC 226 sends NBAP Radio Link Reconfiguration message to the NodeB2 210, which then adds Cell2 212 to the E-DCH reception. E-HICH is assigned to UE1 220 on which ACK/ NACK is sent to UE1 220.
5. The RNC 226 will also send a RRC message to UE1 220. On the reception, UE1 220 does start to listen on the assigned E-HICH from Cell2 212. The macro-diversity gain is now again exploited and hence, user performance is improved.

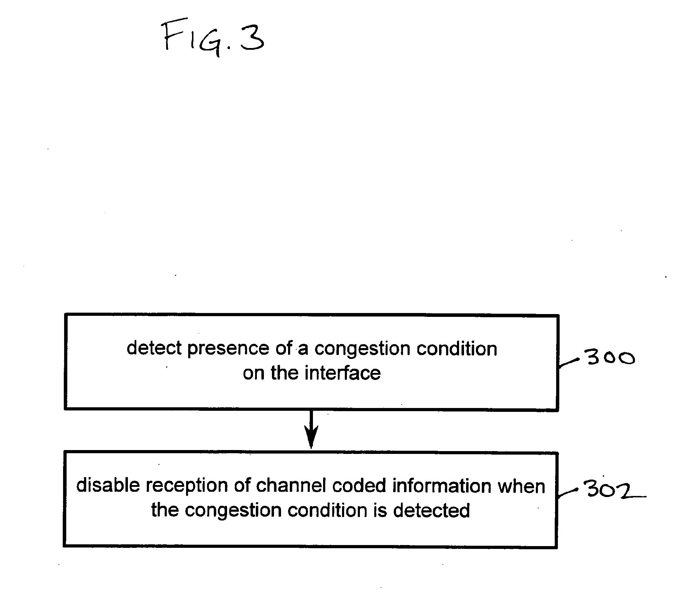

Figure 3 shows an embodiment of a method for managing congestion in a wireless network. In step 300 the presence of a congestion condition on the interface between a base station apparatus and a network controller is detected. In step 302 the reception of channel coded information by the base station apparatus is disabled when the congestion condition is detected. In this method the disabling of the reception of the channel coded information disables the forwarding of the channel coded information from the base station to the network controller. This prevents further traffic being added on the interface.

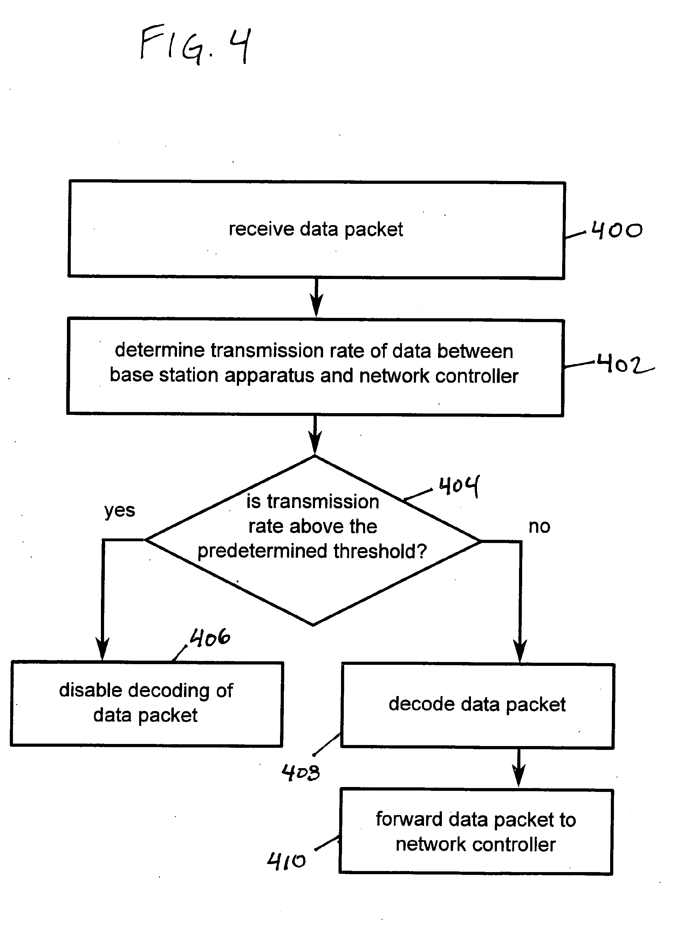

Figure 4 shows another embodiment of a method for managing congestion is a wireless network. In step 400 a data packet is received. In step 402 the transmission rate of data between a base station apparatus and a network controller is determined. In step 404 it is determined if the transmission rate is above a predetermined threshold or not. If the transmission rate is above a predetermined threshold 404 then step 406 is performed. In step 406 the decoding of data packets if disabled. If the transmission rate is not above the predetermined threshold 404, then step 408 is performed. In step 408 the data packet is decoded. After step 408 the next step is forwarding of data packets to the network controller in step 410.

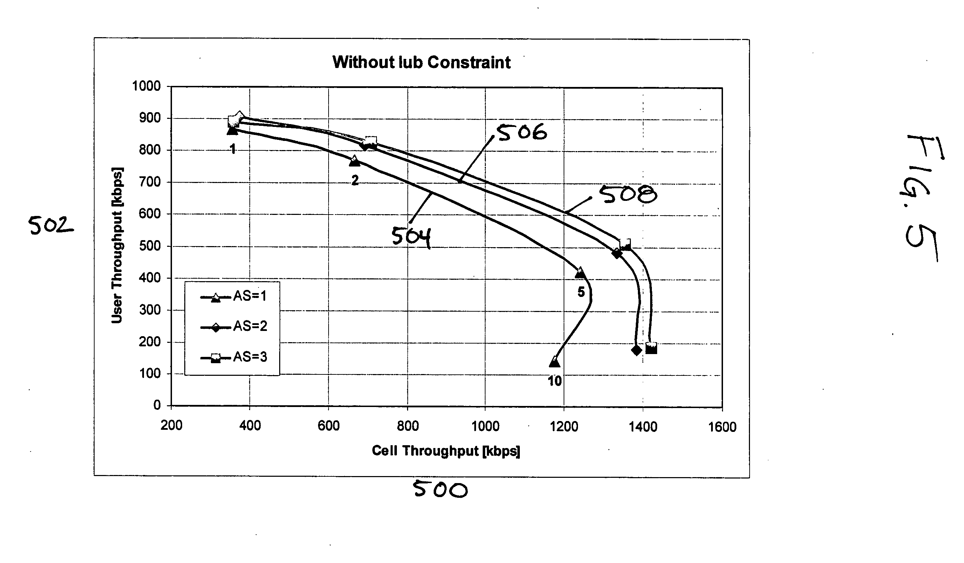

Figure 5 shows a plot of the user throughput 502 in kilobits per second (kbps) as a function of cell or base station apparatus throughput 500 also in kilobits per second. Figure 5 demonstrates E-DCH performance when no limitation is imposed on the transport network. The user throughput 502 is the data that a wireless appliance is transmitting. The data in figure 5 was obtained using a simulation using a dynamic active simulator of the network traffic in a cellular telephone system. User throughput is shown for an active set of 1 wireless communication channel 504 for an active set of 2 506 wireless communication channels or an active set of 3 508 wireless communication channels. In this figure we see that as the active set increases to from 1 to 3 the user throughput also increases. In figure 5 there is no constraint on the lub or network connection between the NodeBs and the radio network controller.

Figure 5 illustrates that when no limit on the transport network (the lub), this trade-off leads to a higher macro-diversity gain and, hence, user and cell throughput improves when increasing the active set (AS) from AS = 1 (i.e. no macro diversity) till AS = 3 (i.e. soft handover to up to three cells).

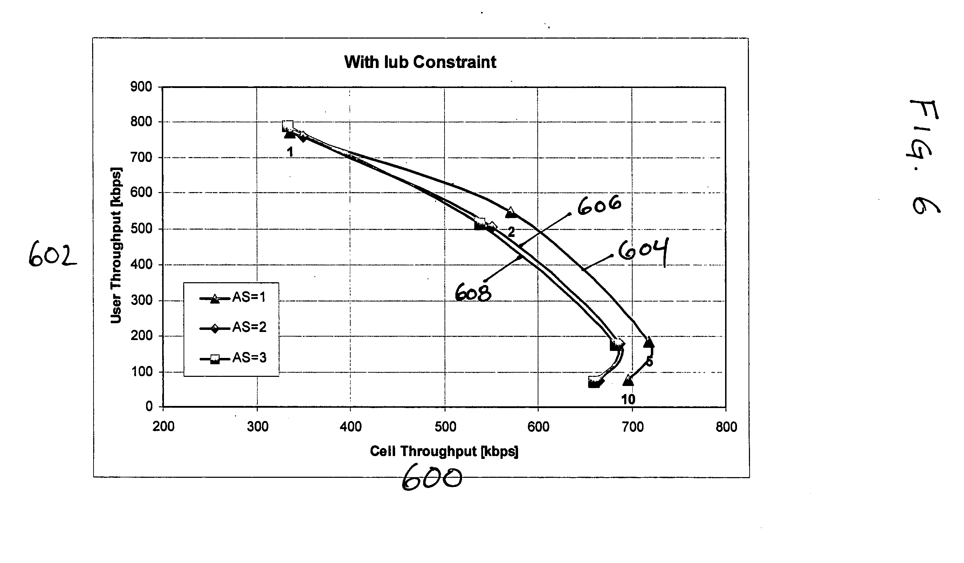

Figure 6 is similar to figure 5 except in this case there is a constraint on the lub. Figure 6 demonstrates E-DCH performance when there are limitation on the transport network. The cell throughput is level 600 and again is in kilobits per second. The user throughput is labeled 602 and again is in kilobits per second. Again this is a simulation of a cellular telephone system. Curve 604 is when the active set is 1. Curve 606 is when the active set is 2 and curve 608 is when the active set is 3. The active set is the number of base station apparatuses that have a radio communication channel with the wireless appliance. In figure 6, we see the effect of the lub constraint is that as the active set increases the user throughput also decreases for high values of the cell throughput. Congested lubs cause the entire user throughput to decrease. From a comparison between the curves 604 (AS=1) and 608 (AS=3), one can see one benefit of a "virtual" reduction of the active set when the lub is congested. Thus the user/cell throughput can be increased.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

### List of reference numerals

- 100: Base station apparatus
- 102: Network controller connector
- 104: Radio system connector
- 106: Control system
- 200: First base station apparatus
- 202: First Radio system
- 204: First Wireless communication channel
- 206: First Scheduler
- 208: lub1
- 210: Second base station apparatus
- 212: Second Radio system
- 214: Second Wireless communication channel
- 216: Second Scheduler
- 218: lub2
- 220: First wireless appliance
- 222: Second wireless appliance
- 224: Third wireless communication channel
- 226: Radio network controller
- 500: Cell throughput in kbps
- 502: User throughput in kpbs
- 504: Active set is one
- 506: Active set is two
- 508: Active set is three
- 600: Cell throughput in kbps
- 602: User throughput in kpbs
- 604: Active set is one
- 606: Active set is two
- 608: Active set is three

## Claims

1. A base station apparatus (100, 200, 210) adapted for connecting a wireless appliance (220, 222) with a network controller (226), the base station apparatus comprising:
- a network controller connector (102) being adapted for receiving a data status report that comprises a measure of the transmission rate of data packets between the base station apparatus and the network controller,
- a radio system connector (104) being adapted for receiving a data packet from the wireless appliance through a wireless communication channel (204, 214),
- a control system (106) being adapted for transferring the data packet between the network controller connector and the radio system connector, wherein the control system is further adapted for receiving the data status report, wherein the control system is further adapted for disabling the reception of the data packet when the measure exceeds a predetermined threshold.

2. The base station apparatus of claim 1, wherein the control system is adapted for decoding the data packet, wherein the reception of the data packet is disabled by disabling the decoding of the data packet.

3. The base station apparatus of claim 1 or 2, wherein the control system is adapted for sending a negative acknowledgement message to the wireless appliance when the measure exceeds the predetermined threshold and the data packet is received.

4. A wireless communication system for connecting a wireless appliance (220, 222) with a communication network, the wireless communication system comprising:
- at least two base station apparatuses (100, 200, 210) according to any one of the preceding claims,
- at least two radio systems (202, 212), wherein there is a radio system connected to each of the at least two base station apparatuses,
- a network controller (226), wherein the network controller is adapted to be connected to a communication network, wherein the network controller is adapted for receiving a data packet from the base station apparatuses.

5. The wireless communication system of claim 4, wherein the wireless communication system is adapted for forming a simultaneous communication channel with the wireless appliance, wherein the simultaneous communication channel comprises at least two radio communication channels formed using the at least two radio systems, wherein all radio systems that form the simultaneous communication channel transmit an identical data packet to the wireless appliance, and wherein all radio systems that form the simultaneous communication channel are adapted to receive the data packet from the wireless appliance.

6. The wireless communication system of clam 5, wherein the all the radio systems that form the simultaneous communication channel are adapted such that the transmission of the identical data packet results in macro-diversity gain.

7. The wireless communication system of claim 4, 5, or 6, wherein at least one of the wireless communication channel is adapted for instructing the wireless appliance to transmit the data packet at a predetermined rate, and wherein the predetermined rate is maintained if the measure for any of the base stations exceeds the predetermined threshold.

8. A method for managing congestion in a wireless network, wherein the wireless network comprises a base station apparatus (100, 200, 210), wherein the base station apparatus is connected to a network controller (226) using an interface (208, 218), wherein the base station apparatus is adapted for receiving channel coded information from a wireless communication channel (204, 214), wherein the method comprises the steps of:
- testing a presence of a congestion condition on the interface (300),
- disabling reception of the channel coded information when a congestion condition is detected (302).

9. The method of claim 8, wherein the base station apparatus is adapted for decoding the channel coded information, wherein the reception of the channel coded information is disabled by disabling the decoding of the channel coded information (406).

10. The method of claim 8 or 9, wherein the method further comprises the step of replying with a negative acknowledgement message when a congestion condition is detected.

11. The method of claim 8, 9, or 10, wherein the channel coded information comprises a data packet, wherein the method further comprises the step of receiving a data packet through the wireless communication channel (400), wherein the detection of the congestion condition on the interface is performed by determining if a measure of the transmission rate of data packets between each base station apparatus and the network controller is above a predetermined threshold (404).

12. The method of claim 11, wherein the wireless network comprises two or more base station apparatuses (100, 200, 210), wherein each base station apparatus is connected to a network controller (226) using an interface (208, 218), wherein each base station apparatus is adapted for receiving channel coded information from a wireless communication channel (204, 214), wherein the method further comprises the step of transmitting an identical data packet on all of the two or more wireless communication channels such that there is a macro-diversity gain.

13. The method of claim 11 or 12, wherein the data packet is received from a wireless appliance (220, 222).

14. The method of claim 13, wherein the method further comprises the steps of:
- instructing the wireless appliance to transmit the data packet at a predetermined rate,
- maintaining the predetermined rate if the measure for any of the base stations exceeds the predetermined threshold for a subsequent data packet.

15. A computer program product comprising machine executable code for performing the method of any one of claims 8 through 14 when loaded and run on computer means of the wireless communication system.

16. A machine readable medium that contains computer program code, wherein, when the computer program code is executed by a processor, the processor performs a method according to any one of claims 8 to 14.
